(19) Europäisches Patentamt / European Patent Office / Office européen des brevets

(11) **EP 2 294 551 B1**

(12) **FASCICULE DE BREVET EUROPEEN**

(45) Date de publication et mention
de la délivrance du brevet:
**05.03.2014   Bulletin 2014/10**

(21) Numéro de dépôt: **09761916.7**

(22) Date de dépôt: **19.05.2009**

(51) Int Cl.:
***G06T 5/00*** *(2006.01)*

(86) Numéro de dépôt international:
**PCT/FR2009/050930**

(87) Numéro de publication internationale:
**WO 2009/150365 (17.12.2009 Gazette 2009/51)**

(54) **PROCÉDÉ D'ENREGISTREMENT D'IMAGES ET DE DONNÉES DE RESTAURATION DE CES IMAGES**

VERFAHREN ZUR AUFZEICHNUNG VON BILDERN UND DATEN ZUR WIEDERHERSTELLUNG DIESER BILDER

METHOD OF RECORDING IMAGES AND DATA FOR RETRIEVING THESE IMAGES

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **19.05.2008   FR 0853215**

(43) Date de publication de la demande:
**16.03.2011   Bulletin 2011/11**

(73) Titulaire: **Prigent, Thierry**
**71390 Sainte Hélène (FR)**

(72) Inventeur: **Prigent, Thierry**
**71390 Sainte Hélène (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**FR-A- 2 867 342         FR-A- 2 879 312**
**US-A- 5 818 032          US-A- 6 006 231**
**US-A1- 2002 191 953**

**Description**

La présente invention est relative à un procédé d'enregistrement d'images et de données de restauration de ces images, chacune de celles-ci se présentant sous la forme d'un réseau bidimensionnel de lignes et de colonnes de pixels.

L'invention est aussi relative au support d'enregistrement résultant de la mise en oeuvre de ce procédé et à un procédé de restauration d'images portées par ce support d'enregistrement.

On décrit dans la demande de brevet français N°07 58910, ci-après appelée demande de brevet précitée, déposée le 9 novembre 2007 au nom du présent demandeur, un procédé d'enregistrement de données pour la lecture automatique à long terme de ces données , suivant lequel on enregistre, sur un même support d'enregistrement, d'une part un enregistrement codé de ces données permettant leur lecture automatique et, d'autre part, un enregistrement, à lecture visuelle intuitive, des connaissances nécessaires à la mise en oeuvre de moyens de décodage de ces données, pour leur lecture automatique.

Ce procédé a pour but d'assurer la sauvegarde à long terme de tous types de données et notamment de données du type « image », couramment enregistrées actuellement sur des supports d'enregistrement numérique exigeant pour leur lecture des moyens logiciels et matériels dont la durée de vie utile est au mieux de quelques lustres, donc incompatible avec un objectif de sauvegarde à long terme.

Pour ce faire la demande de brevet précitée propose d'enregistrer de telles images, issues par exemple d'un programme vidéo, sur un support d'enregistrement de longue pérennité tel qu'un film photographique, ces images étant enregistrées sous une forme adaptée à une lecture humaine directe comme à une lecture automatique à l'aide de moyens de décodage reconstruits à partir des informations à lecture intuitive enregistrées sur le même film. Du fait que ces informations sont à lecture intuitive, elles restent accessibles à très long terme à des lecteurs tels que des archivistes du futur. Elles permettent d'éviter tout recours à des moyens matériels et logiciels de lecture du passé, rapidement perdus par obsolescence.

Il n'en demeure pas moins que le support d'enregistrement lui-même peut, à très long terme, subir des dégradations dues à une transformation lente de sa structure chimique ou physico-chimique ou à des accidents mécaniques tels que des abrasions, déchirures, rayures ou taches, par exemple, dues à des altérations épisodiques de ses conditions de conservation. Ces accidents sont susceptibles de détruire, au moins en partie, le contenu même des images, sur les plages de ces images qui sont accidentées.

On a proposé divers procédés de restauration, ou de réparation, d'images accidentées. Un premier groupe de procédés fait appel la duplication de l'enregistrement des images sur un même support, par exemple dans des positions choisies pour que la détérioration simultanée des divers enregistrements de la même image, lors d'un accident de conservation, soit improbable. Le procédé décrit dans le document FR-A-2 867 342 décrit un tel procédé. Ces procédés présentent l'inconvénient d'être gourmands en surfaces de support d'enregistrement.

On connaît aussi du document FR-A- 2 879 312 un procédé d'écriture et de restauration de données sur un support photographique, ces données étant dites "de conservation" car destinées à une conservation de longue durée. Ces données peuvent être de tout type et notamment du type "image". Pour des données de ce type, enregistrées sous la forme d'une matrice de lignes et de colonnes de pixels permettant de lire l'image à l'oeil nu, ce procédé propose d'enregistrer, pour chaque ligne et chaque colonne, des données de contrôle analogues aux sommes de contrôle ou "checksums" couramment utilisées en informatique pour certifier des données de calcul, Ces données de contrôle, dont l'enregistrement est peu gourmand en surface du support, permettent de déterminer aisément les zones d'une image qui sont endommagées et de réparer celles-ci, dans la mesure où la surface d'une telle zone est très petite, ne dépassant pas 2x2 pixels. Pour des zones d'image à restaurer de plus grande surface le procédé décrit propose de combiner l'utilisation de telles données de contrôle avec l'enregistrement sur le support de plusieurs sous-échantillonnages des pixels de l'image, propres à permettre une restauration de ces zones par des interpolations réalisées à partir de pixels tirés de ces sous-échantillonnages. Le procédé devient alors plus coûteux en surface de support consacrée à l'enregistrement de l'image et de ses données de conservation ou de restauration.

La présente invention a précisément pour but de fournir un procédé d'enregistrement d'images et de données de restauration de ces images qui soit propre à permettre une restauration ultérieure de zones étendues d'une telle image, tout en minimisant la surface de support consacrée à l'enregistrement de ces données de restauration.

On atteint ce but de l'invention, ainsi que d'autres qui apparaîtront à la lecture de la description qui va suivre, avec un procédé d'enregistrement d'images et de données de restauration de ces images, chacune des images se présentant sous la forme d'un réseau bidimensionnel de lignes et de colonnes de pixels, ce procédé étant remarquable en ce que, pour l'élaboration et l'enregistrement des données de restauration, on divise l'image en blocs de pixels, chaque bloc comprenant des pixels d'au moins deux lignes et deux colonnes , on calcule pour chaque bloc des données de restauration à partir d'au moins les données d'image contenues dans les pixels de ce bloc et on enregistre ces données de restauration de ce bloc sous la forme d'au moins un pixel présentant une valeur fonction de ces données de restauration.

Comme on le verra plus loin en détail, grâce à la division de l'image en blocs de pixels et à des traitements spécifiques des données contenues dans ces blocs, il est possible de concentrer, dans une plage d'un support d'enregistrement de l'image, des données de restauration plus riches, à surface égale de cette plage. La surface de cette plage peut alors avantageusement être limitée en tant que de besoin. En outre, la restauration d'images comportant des zones de détérioration de surface étendue devient possible.

Selon d'autres caractéristiques de la présente invention :

- on enregistre l'image et les données de restauration sur des première et deuxième plages d'un support d'enregistrement respectivement, ces plages étant disposées dans une relation de position relative prédéterminée,

- pour calculer les données de restauration, on effectue le produit de convolution des valeurs des pixels de chaque bloc avec un opérateur de filtrage, on calcule l'extremum par bloc et on enregistre les données de restauration ainsi calculées sur la deuxième plage dans une position homologue de celle du bloc de pixels correspondant de l'image enregistrée sur la première plage,

- l'opérateur de filtrage est choisi de manière que la deuxième plage présente une image de contours d'éléments homologues de ceux d'éléments de l'image portée par la première plage,

- en variante, pour calculer les données de restauration, on mesure au moins une caractéristique optique des pixels de chacun des blocs, on additionne lesdites caractéristiques optiques ainsi mesurées et on enregistre au moins un pixel présentant la caractéristique optique somme ainsi calculée sur la deuxième plage dans une position homologue de celle du bloc de pixels correspondant de l'image enregistrée sur la première plage,

- en variante, pour calculer les données de restauration, on applique une transformation en ondelettes à ladite image à partir de mesures d'au moins une caractéristique optique des pixels de chacun desdits blocs et on enregistre au moins une des images de données de restauration résultant de ladite transformation,

- on réitère cette transformation sur au moins une des images résultant de la première transformation et on enregistre au moins une des images résultant de la deuxième transformation,

- on enregistre sur un support d'enregistrement une pluralité d'images de données de restauration résultant de la transformation en ondelettes,

- en variante encore, le procédé suivant l'invention étant appliqué à une image formant partie d'une séquence d'images animées, on calcule, à partir du contenu des blocs d'au moins deux images consécutives de cette séquence, des vecteurs de déplacement de blocs homologues de ces images et on enregistre les composantes de ces vecteurs sur la deuxième plage, dans une position homologue de celle du bloc considéré dans l'image associée,

- on enregistre en outre sur le support des coefficients de pondération de termes d'une combinaison linéaire de blocs permettant de calculer un bloc de remplacement d'un bloc détérioré d'une image enregistrée sur ce support,

- on enregistre en outre sur le support des expressions simplifiées des blocs d'une image, substituables au bloc correspondant quand le calcul dudit bloc de remplacement s'avère impossible,

- quand le support est un support d'enregistrement photographique en couleurs, les enregistrements des vecteurs, des coefficients de pondération et des expressions simplifiées des blocs sont répartis dans des couches d'enregistrement de couleurs différentes de ce support,

- on enregistre en outre sur le support d'enregistrement d'images un mode d'emploi des données de restauration,

- ce mode d'emploi est à lecture visuelle, avantageusement intuitive,

- ce mode d'emploi est en outre à lecture automatique.

L'invention est aussi relative à un support d'enregistrement d'images résultant de la mise en oeuvre de ce procédé, comportant au moins une plage supportant des données de restauration d'une image se présentant sous la forme d'un réseau de lignes et de colonnes de pixels, ces données de restauration étant enregistrées sous la forme d'un deuxième réseau de pixels présentant chacun une caractéristique optique fonction de données de restauration calculées à partir des données d'image contenues dans un des blocs de pixels résultant de la division de l'image pixellisée.

Suivant d'autres caractéristiques de ce support d'enregistrement :

- l'image et les données de restauration sont enregistrées sur des première et deuxième plages du support respectivement, ces plages étant disposées dans une relation de position relative prédéterminée,

- l'aire de la surface de la deuxième plage est avantageusement inférieure ou égale au quart de celle de la première plage.

L'invention est encore relative à un procédé de restauration d'une image portée par un tel support d'enregistrement, suivant lequel a) on détecte une zone détériorée de cette image, et b) on extrait des données de restauration les valeurs de pixels propres à remplacer les pixels de la zone détériorée.

D'autres caractéristiques et avantages de la présente invention apparaîtront à la lecture de la description qui va suivre et à l'examen du dessin annexé dans lequel :

- la figure 1 est un schéma illustrant le principe général qui est à la base du procédé d'enregistrement suivant la présente invention,

- les figures 2 à 5 représentent schématiquement des supports d'enregistrement obtenus par différents modes de mise en oeuvre du procédé suivant l'invention,

- la figure 6 illustre schématiquement un autre mode de mise en oeuvre de ce procédé, adapté à la restauration d'une image formant partie d'une séquence d'images animées,

- la figure 7 représente schématiquement une partie d'un support d'enregistrement d'une séquence d'images animées enregistrées au moyen du procédé illustré par la figure 6,

- les figures 8 et 9 représentent schématiquement une partie d'un support d'enregistrement obtenu par le procédé suivant l'invention, portant un mode d'emploi des informations portées par ce support.

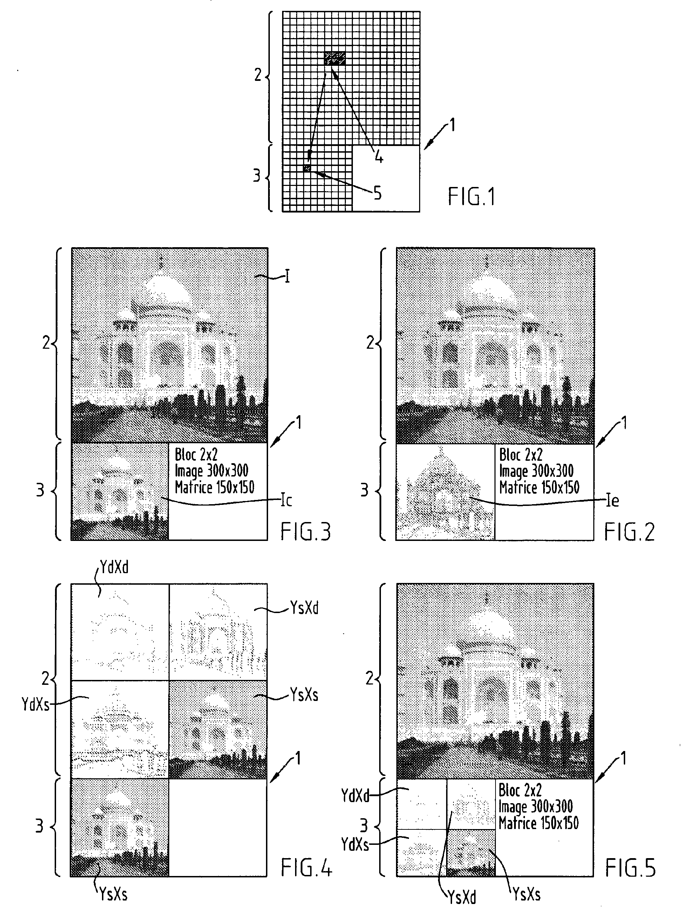

On se réfère à la figure 1 du dessin annexé pour décrire les caractéristiques de base du procédé suivant l'invention. Sur cette figure on a représenté schématiquement un support d'enregistrement d'image 1, du type photographique par exemple, comportant une première plage 2 portant une image pixellisée à lecture visuelle et une deuxième plage 3 consacrée à l'enregistrement de données de restauration de cette image, ces données étant elles aussi enregistrées sous forme d'un réseau ou matrice de pixels. Ces deux plages peuvent être avantageusement adjacentes. Elles sont, en tout cas, disposées dans une relation de position prédéterminée permettant de les associer d'une manière systématique, relation explicitée dans le mode d'emploi décrit dans la suite de la présente description.

L'image portée par la plage 2 peut être lue par simple lecture visuelle ou par lecture automatique. Elle peut être en couleurs ou en noir et blanc et comporter, ou non, des demi-teintes. Pour la clarté du dessin elle n'apparaît pas sur la figure 1 qui ne montre que les limites des différents pixels qui la constituent. De même, sur la plage, ou image, 3 n'apparaissent que les limites des pixels dans lesquels sont enregistrées les données de restauration et non les caractéristiques optiques, numérisées, de ces pixels, qui sont des images des données de restauration contenues dans cette plage 3. Ces données de restauration sont ainsi représentées par des niveaux prédéterminés de densité optique et/ou de couleur des pixels où elles sont enregistrées.

Suivant une caractéristique importante de la présente invention, pour l'établissement de ces données de restauration, on divise la matrice de pixels constituant l'image 2 en une mosaïque de blocs de pixels tels que le bloc 4. Ces blocs peuvent être conjoints ou disjoints. Ils sont constitués de pixels contenus dans au moins deux lignes et au moins deux colonnes de pixels de l'image 2.

A titre illustratif et non limitatif seulement, le bloc 4 représenté comporte 3x2 soit 6 pixels prélevés dans deux lignes et trois colonnes de l'image 2, alors que l'image 2 comprend 20x20 soit 400 pixels et que la plage 3 comprend 10x10 pixels. Il est clair que l'image 2 pourrait compter un nombre de pixels beaucoup plus grand. Les petites dimensions de l'image 2 n'ont été choisies que pour assurer la clarté de la figure 1.

Suivant la présente invention encore, des calculs sont effectués sur les pixels de chaque bloc pour tirer de ces pixels une information représentative des caractéristiques optiques des pixels du bloc, considérées dans leur globalité. Ces calculs font intervenir des valeurs codées des pixels de l'image, comme pour les pixels de la plage 3 des données de restauration.

Cette information est alors enregistrée dans un pixel 5 sur la plage 3. Celle-ci peut être de forme quelconque. Avantageusement cependant, il est plus cohérent de lui donner la forme de l'image associée et d'enregistrer l'information sur cette plage 3 dans une position homologue de celle du bloc 4 associé sur la plage 2. Ainsi, si l'image 2 subit un dommage affectant notamment le bloc de pixels 4, le restaurateur trouvera aisément dans le pixel 5 une information susceptible de l'aider à restaurer ce bloc de pixels.

Sur la figure 1, cette information est contenue dans un seul pixel 5 de la plage 3. Elle pourrait aussi, en fonction de sa richesse, occuper plusieurs pixels. Cependant, en la concentrant sur un seul pixel, on réduit avantageusement au maximum la surface de la plage 3, donc la surface du support dévolue à l'enregistrement des informations utiles à la restauration de l'image associée, conformément au but de l'invention annoncé plus haut.

Ainsi la plage d'image 2 représentée à la figure 1 compte 400 pixels alors que la plage 3 en compte 100. Les pixels des deux plages étant supposés de même dimensions, la plage 3, contenant les informations, ou données, de restauration, est alors de surface quatre fois moindre que la plage d'image 2. L'accroissement de la surface du support dû à l'incorporation des moyens de restauration d'image suivant l'invention est alors de 25%, ce qui est considéré comme raisonnable et largement justifié par l'intérêt que présente la présence de ces moyens sur le support, notamment pour assurer l'exploitation à long terme du contenu de documents d'archives.

Sur le support 1, un emboîtement judicieux des paires de plages 2 et 3 associées chacune à l'une de plusieurs images différentes enregistrées sur ce même support pourra d'ailleurs permettre de minimiser leur encombrement.

On dispose dans la plage 3 d'un pixel pour 4 pixels de la plage 2. Le bloc 4 comptant 3x2 soit 6 pixels, il y a recouvrement géométrique des blocs sur 1/3 de leur surface. Ce recouvrement n'est pas nécessaire mais il est avantageux.

Avant de décrire divers modes de calcul des informations à enregistrer dans la plage 3 pour permettre la restauration de l'image associée dans le cas où celle-ci aurait subie des dégradations à un moment quelconque de son histoire, on rappelle les contraintes que posent une telle restauration. Comme pour celle d'une oeuvre graphique classique telle qu'un tableau ancien, le restaurateur doit disposer au moins des moyens lui permettant de restituer, dans les zones endommagées, a) le tracé des contours disparus des diverses plages colorées de la couche picturale et b) les couleurs de ces plages. Le tracé des contours déterminant généralement le contenu sémantique de l'image, c'est à la restitution des contours disparus que l'on s'attache en priorité sans pour autant négliger, bien entendu, la restitution du contenu chromatique de l'image.

Suivant la présente invention, on procède avantageusement à l'enregistrement des informations nécessaires à cette restitution lors de l'enregistrement de l'image elle-même. C'est en effet alors que l'image est encore intacte qu'il est possible d'extraire de celle-ci des informations fiables et riches quant à son contenu sémantique ou chromatique. Les informations extraites doivent en outre concerner la surface entière de l'image de manière à permettre la restauration ultérieure éventuelle d'une zone quelconque de cette image.

Comme on va le décrire en plus de détail dans la suite, on fait alors appel à des procédés de compression de données d'image, par exemple, pour extraire ces informations de l'image encore intacte, ces procédés permettant avantageusement de limiter la surface du support consacrée à l'enregistrement des données de restitution.

Dans le cas d'un support d'enregistrement destiné à constituer une archive devant rester exploitable à long ou très long terme, comme c'est le cas de celui décrit dans la demande de brevet français n°07 58910 précitée, le support pourra comporter en outre avantageusement un enregistrement codé des données de restitution et un enregistrement, à lecture visuelle intuitive, des connaissances nécessaires à la mise en oeuvre de moyens de décodage de ces données, pour leur lecture et leur exploitation automatique. On pourra se référer à cette demande de brevet pour plus de détails sur ce point.

On se réfère à la figure 2 du dessin annexé qui représente un premier mode de réalisation du support d'enregistrement schématisé à la figure 1, obtenu par un premier mode de mise en oeuvre du procédé d'enregistrement suivant l'invention. La plage 2 de ce support est couverte par une image photographique en couleurs I du Taj Mahal par exemple, célèbre monument indien. Cette image est pixellisée sous la forme d'une matrice carrée de 300 x300 pixels. La plage 3 est recouverte par une esquisse Ie plus petite, en noir et blanc, de l'image I.

Suivant l'invention cette esquisse $I_e$ est obtenue par filtrage des pixels de l'image I. Le filtrage est réalisé au moyen d'un opérateur matriciel connu sous le nom d'opérateur de Laplace, dans l'expression particulière suivante :

| 0 | -1 | 0 |
|----|----|----|
| -1 | 4 | -1 |
| 0 | -1 | 0 |

Pour ce faire on effectue le produit de convolution de la matrice de pixels de l'image I avec la matrice de filtrage représentée ci-dessus, on détermine l'extremum par bloc (ici constitué de 2x2 pixels) et on stocke le résultat par bloc dans un pixel (blanc ou noir) d'une matrice de pixels enregistrée sur la plage 3, la position de ce pixel dans cette matrice étant homologue de celle du bloc associé dans la matrice de pixels de la plage 2.

Pour les besoins de l'illustration le contraste de l'image $I_e$ obtenue a été inversé et seuillé.

En procédant ainsi, cette transformation conserve avantageusement l'aspect général de l'image, notamment celui des contours de ses divers éléments. Son format plus réduit (matrice de 150x150 pixels) satisfait à la contrainte posée plus haut, selon laquelle la surface du support consacrée à l'enregistrement de données de restauration de l'image I ne doit pas, avantageusement, dépasser 25% de la surface du support.

Il est clair que l'image $I_e$ peut être utilisée pour restaurer des parties abîmées ou disparues de l'image I, soit par lecture visuelle et interprétation de cette image par un restaurateur humain, soit par lecture et restauration automatique au moyen d'un logiciel conçu à cet effet.

D'autres opérateurs extracteurs de contours tels que ceux de Roberts, Prewitt ou Sobel par exemple, pourraient être utilisés en lieu et place de l'opérateur de Laplace défini ci-dessus.

La figure 3 représente un autre mode de réalisation du support d'enregistrement suivant l'invention, dans lequel l'image $I_c$ portée par la plage 3 est obtenue par sommation des valeurs des pixels de chacun des blocs de pixels de l'image I, ou par calcul de la valeur moyenne de ces pixels, et enregistrement de la valeur ainsi calculée dans un pixel de position homologue dans la plage 3.

Ainsi, pour un bloc de 2x2 pixels Pij disposés comme suit à l'intersection de la colonne i et de la ligne j :

P00     P10
P01     P11

on calcule la somme (P00+P10+P01+P11) qu'on divise éventuellement par 4 et qu'on enregistre ensuite dans la plage 3. L'image $I_c$ obtenue reproduit l'image I originale, y compris ses couleurs, comprimée dans le rapport 4. Elle peut être utilisée, comme l'image $I_e$ de la figure 2, à la restauration de parties endommagées de l'image originale.

Ben entendu, toute autre formulation du type « somme » pourrait être utilisée, sans sortir du cadre de la présente invention. On en voit des exemples dans les modes de réalisation du support suivant l'invention schématisés aux figures 4 et 5. De même des blocs de pixels d'ordre supérieur, tels que des blocs 3x3 ou 4x4 par exemple, pourraient être substitués au bloc 2x2 ci-dessus.

Les modes de réalisation des figures 4 et 5 font appel à une technique d'analyse de données, plus particulièrement de données d'images, connue sous le nom de « transformation en ondelettes ». Cette technique est actuellement utilisée notamment dans des algorithmes de compression d'images numériques tel que le codeur JPEG2000.

Selon cette technique, explicitée dans la suite sous sa forme la plus simple connue, à partir des valeurs des pixels du bloc de 2x2 pixels présenté ci-dessus, on calcule les valeurs des combinaisons linéaires suivantes de ces valeurs de pixels :

$$YdXd = (P00 - P10 - P01 + P11)$$

$$YdXs = (P00 + P10 - P01 - P11)$$

$$YsXd = (P00 - P10 + P01 - P11)$$

$$YsXs = (P00 + P10 + P01 + P11)/4$$

Dans les noms de ces combinaisons linéaires, les lettres d et s se rapportent à des sommes et à des différences, respectivement. C'est ainsi que la combinaison YsXd par exemple fait apparaître des sommes entre pixels alignés dans une même colonne (axe Y) et des différences entre pixels alignés dans une même ligne (axe X).

En reportant, pour chaque combinaison, sa valeur dans un pixel occupant dans un réseau de tels pixels une position homologue de celle du bloc de pixels qui a servi à calculer cette valeur, on obtient quatre images de « données de restauration » ou « sous-images ».

Sur la figure 4, ces quatre sous-images sont enregistrées sur la plage 2 en lieu et place de l'image originale. La sous-image YsXs est aussi enregistrée sur la plage 3, seulement en tant que double de sécurité. Elle pourrait donc être omise.

Dans ce cas le support d'enregistrement ne comporte aucun enregistrement de l'image originale proprement dite. Les quatre images de données de restauration permettent cependant de la reconstituer dans son intégralité comme en partie seulement, dans le cas où cette partie correspond à une zone dégradée de l'une des quatre images, par exemple.

On remarquera que la combinaison YsXs est identique à la somme calculée pour le mode de réalisation de la figure 2. En ce qui concerne les images correspondant aux autres combinaisons on notera que :

- l'image des YdXd est sensible aux transitions diagonales,
- l'image des YsXd est sensible aux transitions horizontales, et
- l'image des YdXs est sensible aux transitions verticales.

La sous-image YsXs est celle qui porte l'information principale, notamment l'information chromatique. C'est pourquoi elle peut être enregistrée en double de sécurité, comme indiqué ci-dessus. Dans le cas extrême où seule la sous-image YsXs aurait survécu à des dégradations, les différents blocs de l'image originale peuvent être reconstitués par « expansion » (interpolation ou duplication) des pixels de la sous-image.

Dans la mesure où des pixels d'une sous-image sont en défaut, les coefficients correspondants sont mis à zéro lors du processus de reconstruction. Dans l'image reconstituée, le ou les blocs affectés perdent en contenu spectral mais l'image globale reste intelligible.

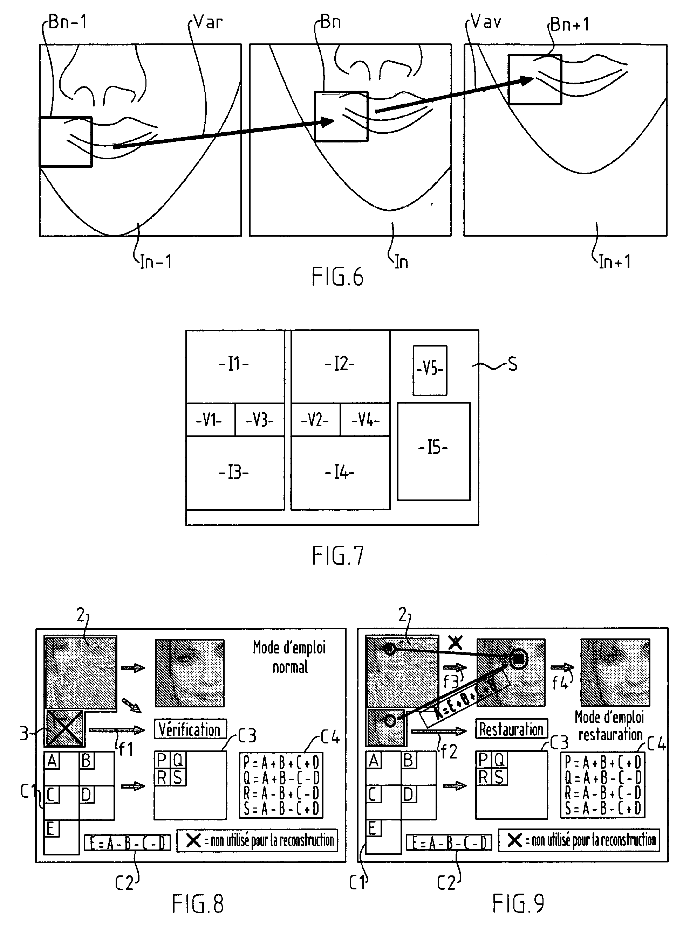

La technique de reconstruction d'une image à partir des sous-images obtenues par la transformation en ondelettes sera expliquée en plus de détail dans la suite, en liaison avec la figure 9.

Les transformations en ondelettes peuvent faire l'objet de nombreuses variantes comme le montre, à titre d'exemple illustratif et non limitatif, la figure 5. Sur le support 1 représenté à cette figure, la plage 2 est occupée par l'image originale, comme dans les modes de réalisation des figures 2 et 3. Sur la plage 3 on trouve les quatre transformées en ondelettes qui résultent d'une nouvelle application de la transformation au terme YsXs défini ci-dessus. On retrouve alors un support comportant une images originale complète et ses transformées.

Comme on l'a vu plus haut, les informations contenues dans les divers modes de réalisation décrits ci-dessus du support suivant l'invention peuvent être utilisées par un restaurateur humain ou automatique pour reconstituer des parties endommagées d'une image originale.

Avec le mode de réalisation de la figure 2, pour une image fixe ou isolée, l'esquisse $I_e$ remplacera des zones de pixels défectueuses ou manquantes. Le restaurateur repeindra ces zones en cohérence visuelle de couleurs, teintes et luminosité avec des parties réputées saines de l'image au voisinage de ces zones.

Si l'image à restaurer fait partie d'une séquence d'images animées, l'esquisse peut servir de point de verrouillage pour une recherche de correspondance de blocs (ou « block matching ») telle qu'on la décrira dans la suite de la présente description.

Avec le mode de réalisation de la figure 3, pour lequel on calcule la somme des pixels de chaque bloc, chaque bloc endommagé est remplacé par la somme, ou « checksum », calculée, éventuellement moyennée. En outre, une interpolation à partir des zones saines environnantes pourra être itérée jusqu'à ce que les sommes calculées sur les blocs de remplacement soient égales aux valeurs enregistrées.

Dans le cas d'une image formant partie d'une séquence d'images animées, on réalisera une interpolation à partir des images précédentes et suivantes, jusqu'à ce que les checksums des blocs de remplacement atteignent les valeurs conservées.

Le mode de réalisation de la figure 3, à checksums, est particulièrement intéressant pour traiter des sous-images désentrelacées telles qu'on en trouve dans les enregistrements d'images vidéo par exemple. Le checksum peut alors donner directement les valeurs manquantes, par simple addition arithmétique. Il suffit pour cela que les défauts affectant les sous-images ne se recouvrent pas lors de la reconstitution d'une image complète.

Dans le cas contraire, on itérera des interpolations entre pixels sains jusqu'à retrouver une cohérence entre checksum calculé et checksum conservé.

Avec les modes de réalisation des figures 4 et 5, à transformées en ondelettes, on commence par reconstituer l'image complète à partir des images de YsXs, YsXd, YdXs, YdXd. L'impact d'un défaut sur YsXs est fort, alors que celui d'un défaut sur YsXd ou YdXs est moyen et celui d'un défaut sur YdXd est faible. L'image de YsXs est la plus critique. C'est pourquoi elle est dupliquée dans le mode de réalisation de la figure 4.

Si YdXd est affectée d'un défaut, il suffit pratiquement de mettre à zéro la partie endommagée. L'impact, faible, se disperse à l'intérieur des équations de reconstruction d'un bloc.

Si YsXd ou YdXs sont endommagées, on les remplace par une esquisse similaire à celle du mode de réalisation de la figure 2, obtenue par leur simple addition, cumulée avec YdXd. On peut alors reconstituer les pixels des différents blocs de l'image par les équations suivantes :

$$P00 = YsXs + YdXs + YsXd + YdXd$$

$$P01 = YsXs - YdXs + YsXd - YdXd$$

$$P10 = YsXs + YdXs - YsXd - YdXd$$

$$P11 = YsXs - YdXs - YsXd + YdXd$$

Si les images YiXj combinées ci-dessus sont désentrelacées, la réparation de l'une quelconque d'entre elles devra commencer par une interpolation, ce qui améliore la qualité du résultat.

Enfin, compte tenu du faible impact évoqué ci-dessus du terme YdXd, on pourra supprimer l'image de ce terme sur le support d'enregistrement afin d'économiser la surface de ce support. On pourra aussi la remplacer par une image supplémentaire du terme YsXs, au bénéfice d'une redondance accrue des informations les plus pertinentes à prendre en compte lors de la reconstruction d'une image altérée.

En outre, comme on le verra en relation avec la figure 9, l'existence d'une cinquième donnée E (la deuxième plage) permet de recalculer directement des termes manquants d'une sous-image YiXj. Cette deuxième plage n'est pas nécessairement une copie de YsXs pourvu que le système d'équations permette de remonter aux termes manquants.

On sait qu'il existe le plus souvent une forte redondance entre les contenus d'images adjacentes d'une séquence d'images animées. Cette redondance est d'ailleurs couramment exploitée de nos jours pour compresser des données d'images vidéo ou de télévision en vue de leur enregistrement sur des supports permettant de diffuser ces images de manière économique.

On connaît à cet effet une technique de compression d'images procédant par recherche de correspondance de blocs (ou «block matching», selon l'expression anglaise consacrée). Celle-ci consiste à rechercher par intercorrélation l'existence et la position de blocs de pixels identiques ou analogues dans des images consécutives de manière que l'enregistrement de la position et de la teneur de tels blocs soient utilisables pour l'enregistrement d'au moins deux images consécutives de la séquence. On va décrire dans la suite comment cette technique peut être utilisée dans le cadre du procédé d'enregistrement d'images et de données de restauration de ces images suivant la présente invention, appliqué à l'enregistrement d'une séquence d'images animées.

On se réfère à la figure 6 du dessin annexé où l'on a représenté trois images consécutives $I_{n-1}$, $I_n$, $I_{n+1}$ d'une telle séquence. Le bloc de pixels $B_n$ de l'image $I_n$ trouve des correspondants $B_{n-1}$ et $B_{n+1}$ respectivement dans les images $I_{n-1}$, $I_{n+1}$ adjacentes, respectivement. On reconnaît en effet dans les trois blocs une partie du coin de la bouche d'un même visage féminin. Pour la clarté de la figure ces blocs sont de grande taille. En réalité ce seront des blocs plus petits comptant 3x3, 4x4 ou encore 4x3 pixels, par exemple.

Suivant l'invention, au cas où les pixels du bloc $B_n$ de l'image $I_n$ seraient endommagés, on restaure cette image en remplaçant ce bloc par un des blocs homologues adjacents ou par un bloc résultant d'une combinaison de ces blocs, une combinaison linéaire par exemple dans le cas le plus simple.

Il faut pour cela connaître les «vecteurs de déplacement» $V_{ar}$, $V_{av}$ des blocs homologues, d'une image à l'autre. A l'image $I_n$ est ainsi attaché un champ de vecteurs venu de $I_{n-1}$ et celui allant à $I_{n+1}$. L'arrivée d'un vecteur arrière $V_{ar}$ est calée sur la grille, ou réseau, de pixels de $I_n$ alors que le départ du vecteur avant $V_{av}$ est lui aussi calé sur cette grille. Il en est de même pour les images adjacentes.

C'est ainsi que :

- l'arrivée du vecteur arrière provenant de $I_{n-1}$ est calée sur la grille de blocs de $I_n$. Son départ est quelconque dans l'image $I_{n-1}$.

- le départ du vecteur avant à destination de $I_{n+1}$ est calé sur la grille de blocs de $I_n$. Son arrivée est quelconque dans l'image $I_{n+1}$.

- à chaque bloc $B_n$ est attaché un vecteur arrière et un vecteur avant.

- chaque bloc $B_n$ profite aussi du vecteur avant de $B_{n-1}$ et du vecteur arrière de $B_{n+1}$.

De manière optimale on retiendra dans les calculs un couple de vecteurs avant/arrière « légitimes » et un couple recomposé emprunté aux blocs $B_{n-1}$ et $B_{n+1}$.

Il en résulte l'existence, pour la réparation de l'image $I_n$, de deux champs de vecteurs arrière et de deux champs de vecteurs avant, si on se limite à prendre en compte les images immédiatement adjacentes seulement. En variante les calculs pourraient prendre aussi en compte les images $I_{n-2}$, $I_{n+2}$ et au-delà. En variante encore, par mesure d'économies, les calculs pourraient ne prendre en compte que les seuls vecteurs arrière ou avant.

Des coefficients de pondération peuvent avantageusement être associés aux différents blocs pris en compte pour calculer un bloc de remplacement d'un bloc endommagé de l'image $I_n$. L'équation mathématique permettant de calculer ce bloc peut alors prendre la forme d'une combinaison linéaire des blocs pris en compte, pondérés par ces coefficients.

Si on ne peut déterminer, pour une partie de l'image, une équation de réparation satisfaisante de ce bloc, on pourra adopter la stratégie d'exception suivante. Les coefficients de pondération sont maintenus à zéro et la zone d'image en cause est dupliquée et enregistrée séparément sur le support pour servir éventuellement de matériel de réparation.

Avant de les réparer il faut évidemment détecter l'existence de défauts sur une image. Suivant une stratégie de détection possible, pour chaque bloc d'une image, on effectue des calculs de corrélation avec, et entre, les blocs homologues des images adjacentes. A l'aide d'une matrice de décision faisant appel au principe d'élection à la majorité, par exemple, on pourra décider si le bloc considéré de l'image $I_n$ est affecté ou non de défaut.

Lorsque la détection de défaut est certaine, la réparation s'effectue par remplacement du bloc défectueux (en partie ou en totalité) par une combinaison pondérée des blocs correspondants prélevés dans les images adjacentes.

Ainsi, suivant la variante du procédé selon la présente invention décrite ci-dessus, les champs de vecteurs de déplacement sont à la base de la détection comme de la réparation des défauts de l'image. On observera que la détermination de ces champs de vecteurs se fait, suivant l'invention, alors qu'on dispose d'images intactes pour procéder à cette détermination. Ainsi, dans cette variante comme dans les autres décrites plus haut, le procédé suivant l'invention d'enregistrement d'images en même temps que de données de restauration de ces images, permet avantageusement de conserver, dès l'origine et dans les meilleures conditions, les paramètres primordiaux de cette restauration.

Le support d'enregistrement obtenu par ce procédé peut prendre des formes très variées, en fonction des besoins, eux aussi très variés. A titre d'exemple illustratif et non limitatif seulement, on a représenté à la figure 7 du dessin annexé un mode de réalisation d'un tel support, adapté à l'enregistrement d'images au format CCIR-601 /50 Hz, de 720x576 pixels, sur un film photographique de 35 mm de largeur.

Des éléments de surface S successifs d'un tel film peuvent être impressionnés à l'aide d'une matrice d'écriture de 2048x1536 pixels. Comme l'illustre la figure 7, un tel élément S peut porter 5 images $I_i$ (i de 1 à 5) au format défini ci-dessus en deux rangées de 2 images $I_1$, $I_2$ et $I_3$, $I_4$ séparées par 4 plages alignées de données de restauration $V_1$ à $V_4$, l'espace restant accueillant une cinquième image $I_5$ et sa plage de données de restauration $V_5$ associée.

Dans le cas où les données de restauration ont été établies par la technique du « block matching » décrite ci-dessus, on trouve dans une plage de données $V_1$ les valeurs des vecteurs de déplacement associés à chaque bloc de pixels de l'image $I_i$ correspondante, dans une position homologue de celle de ce bloc dans cette image.

Les vecteurs peuvent être chiffrés de multiples façons, à l'initiative de l'homme de métier. En tout état de cause le mode d'emploi évoqué plus haut doit en donner les règles.

C'est ainsi que, par exemple, les coordonnées du bloc homologue dans l'image $I_{n-1}$ peuvent être exprimées en coordonnées « absolues » par rapport au coin supérieur gauche de cette image ou en coordonnées « relatives » par rapport à la position du bloc considéré de l'image $I_n$.

La surface dévolue à chacune des plages de données de restauration est avantageusement égale au quart seulement de celle de l'image associée, conformément à un des buts de l'invention énoncé en préambule de la présente description.

A cet égard on notera un avantage de la technique du « block matching » qui réside dans l'indépendance entre la taille des blocs (2x2, 8x8, 32x32, etc...) et les vecteurs. Si le bloc est petit (par exemple 2x2 soit 4 pixels) un codage des vecteurs sur plus de 4 pixels serait pénalisant en matière de surface du support d'enregistrement utilisé. Si au contraire le bloc est plus grand (par exemple 8x8 soit 64 pixels) on pourra avantageusement utiliser 8 pixels pour coder les vecteurs car ce nombre est largement inférieur au nombre des pixels du bloc.

Il est ainsi possible d'ajuster la taille des blocs afin de s'adapter à la surface disponible sur le support d'enregistrement. La règle du quart posée ci-dessus concernant la place occupée par les données de restauration sur ce support pourra être transgressée en cas de nécessité.

On revient à la figure 6 pour définir avec plus de précision ce qu'il faut entendre par " vecteur" X1, Y1 ou X2, Y2, au sens de la présente invention. On désigne par X1, Y1 les coordonnées du bloc $B_{n-1}$ et par X2, Y2 celles du bloc $B_{n+1}$ dans la matrice de pixels de l'image correspondante.

Pour faciliter la lecture de ces données, chaque donnée Xi ou Yi est enregistrée sur 4 pixels de la plage de données concernée. Quand on utilise pour l'enregistrement un film photographique couleurs, comportant par exemple des couches d'enregistrement des couleurs rouge, verte et bleue, on peut coder ces données en intensité lumineuse et les enregistrer sous forme de densités optiques dans une de ces trois couches.

Les coefficients de pondération peuvent alors être enregistrés dans l'une des deux autres couches, également en densités optiques.

Enfin la troisième couche pourra être consacrée à l'enregistrement de versions simplifiées des différents blocs de pixels, pour le cas où la recherche de correspondance entre des blocs d'images adjacentes échouerait, comme on l'a vu plus haut. Ces versions simplifiées devront avantageusement définir au moins les zones de transition entre plages adjacentes de l'image, c'est-à-dire en fait les contours des objets représentés sur cette image. En effet ces contours représentent l'essentiel du contenu sémantique de l'image. Leur reconstruction rend aisée la restauration des couleurs des plages que ces contours délimitent.

D'autres dispositions des données de restauration dans les trois couches précitées sont évidemment possibles ; C'est ainsi que les "vecteurs" X1, Y1 pourraient être enregistrés dans une des trois couches avec certains coefficients de pondération, tandis que les "vecteurs" X2, Y2 sont enregistrés dans une autre avec d'autres coefficients de pondération.

La stratégie de placement des images sur la surface du support S dépend de la taille, souvent normalisée, des images. C'est ainsi que, par exemple, des images plus grandes, de 4096x3072 pixels par exemple, pourront être scindées en 4 sous-images de la taille de la matrice d'écriture. Une cinquième image, enregistrée en séquence porte alors les informations concernant les vecteurs de déplacement.

Il est clair, à défaut de normalisation, que le support d'enregistrement devra comporter des informations permettant de définir, comprendre et mettre en oeuvre le mode d'emploi décrit ci-dessus des données de restauration incorporées à ce support.

C'est particulièrement le cas quand ce support constitue une archive devant assurer la conservation et l'accessibilité à long ou très long terme des informations enregistrées, comme c'est le cas du support d'enregistrement décrite dans la demande de brevet français n°07 58910 précitée.

Ce mode d'emploi devra alors être clairement explicité, par exemple dans une partie d'en-tête de la bande de film photographique évoquée ci-dessus, en particulier au moyen d'un schéma tel que celui de la figure 7 reproduisant la disposition des différentes plages d'image et de données sur un élément de surface de ce film. Avantageusement, en particulier dans le cas d'une archive destinée à une exploitation à très long terme, plusieurs siècles par exemple, la présentation de ce mode d'emploi devra être telle qu'elle rende possible, pour un archiviste du futur, la compréhension de ce mode d'emploi par le seul jeu d'une lecture visuelle intuitive. On trouvera dans la demande de brevet précitée toutes les informations nécessaires à la réalisation d'une archive de ce type.

Des modes d'emploi équivalents peuvent être établis pour des supports d'enregistrement dans lesquels les données de restauration des images ont été élaborées au moyen de techniques autres que le block matching, par exemple au moyen de transformées en ondelettes comme on l'a décrit plus haut.

On a représenté aux figures 8 et 9, à titre d'exemple illustratif et non limitatif seulement, deux plages de mode d'emploi propres à permettre une compréhension intuitive du processus de reconstruction de l'image originale (voir la figure 8) à partir des sous-images A, B, C et D obtenues par une transformation en ondelettes de cette image originale et du processus de réparation de cette image en cas de détérioration d'une de ses sous-images (voir figure 9).

La figure 8 représente un mode d'emploi « normal » dans le cas d'un enregistrement du type de celui représenté à la figure 4, faisant appel à une transformation en ondelettes. La page symbolise le placement relatif des sous-images A,B,C et D sur la première plage 2 et E sur la deuxième plage 3 (voir le cadre $C_1$) tel qu'un utilisateur peut le reconnaître sur l'archive à exploiter, une bande de film photographique par exemple.

La page de la figure 8 montre que la seconde plage 3 (ou E) est à utiliser afin de vérifier la cohérence de reconstruction de l'image d'origine. Une flèche $f_1$ provenant de E pointe sur le terme « vérification ».

Pour les pixels correspondants des sous-images A,B,C et D on doit vérifier l'équation figurant dans le cadre $C_2$ :

$$E = A\text{-}B\text{-}C\text{-}D$$

La plage 3 est alors utilisée en tant que « checksum » afin de détecter les pixels erronés.

La page de la figure 8 illustre aussi le processus de reconstitution des pixels originaux P, Q, R et S (voir

cadre $C_3$) par utilisation des pixels des sousplages A,B, C et D et des relations suivantes (figurant dans le cadre $C_4$) :

$$P = A+B+C+D$$

$$Q = A+B-C-D$$

$$R = A-B+C-D$$

$$S = A-B-C+D$$

La figure 9 représente une autre page du mode d'emploi intitulée « restauration ». Elle illustre symboliquement le processus de restauration suivant l'invention, dans le cas où un défaut Df affecte la sous-image A. Le caractère A barré d'une croix suggère que Df est un défaut de cette sous- image. D'autres pages, non représentées, pourraient illustrer les cas de défauts affectant les sous-images B,C ou D.

Une flèche $f_2$ provenant de la sous-image E pointe sur le terme « restauration » et une autre flèche $f_3$ pointe sur la zone en défaut de l'image reconstituée afin d'inciter à l'utilisation des pixels de E pour réparer le défaut.

Les pixels de A endommagés sont remplacés par des pixels A' calculés par l'équation :

$$A' = E+B+C+D$$

Enfin une dernière flèche $f_4$ pointe sur l'image finale réparée.

S'il avère nécessaire d'illustrer la réparation d'un défaut survenant dans les sous-images B, C ou D, des pages analogues peuvent être enregistrées dans la bande archive avec, suivant les cas :

- dans le cas d'un défaut sur B, l'équation B'= E-A+C+D
- dans le cas d'un défaut sur C, l'équation C' = E-A+B+D
- dans le cas d'un défaut sur D, l'équation D' = E-A+B+C

Il est évident que des modes d'emploi utilisant d'autres représentations symboliques visant à atteindre le même résultat pourraient être substitués à celui décrit ci-dessus, sans que l'on sorte du cadre de la présente invention.

Il apparaît maintenant que l'invention permet bien d'atteindre les buts annoncés, à savoir réaliser un support d'enregistrement d'images incorporant des données de restauration de ces images qui occupent, sur la surface de ce support, un espace raisonnablement limité tout en constituant un puissant moyen de restauration, éventuellement utilisable à très long terme quand ce support est destiné à constituer une archive. Cette puissance résulte notamment de l'élaboration de ces données de restauration à un moment où l'on dispose du maximum d'informations quant à la teneur des images qui seront éventuellement à restaurer après dégradation, c'est-à-dire avant que de telles dégradations n'affectent le volume de ces informations.

Bien entendu l'invention n'est pas limitée aux modes de réalisation décrits et représentés, qui n'ont été donné qu'à titre d'exemple. C'est ainsi que des procédés de restauration d'images décrits ci-dessus comme utilisés séparément pourraient être utilisés en combinaison. On pourrait ainsi associer à une image une première plage de données élaborées à partir de sommes de contrôle et une deuxième plage de données issues de la technique du block matching.

Enfin, le procédé de restauration d'images suivant l'invention exposé ci-dessus est susceptible d'application à des images autres que celles fixées sur un support où celles-ci sont visibles, par exemple à des images enregistrées sous la forme de fichiers numériques sur des supports tels que des mémoires « à l'état solide », des mémoires magnétiques ou encore des disques optiques numériques.

En effet ce procédé peut alors être utilisé pour reconstituer des pixels manquants de la mosaïque de pixels enregistrée sur un tel support. Le processus de traitement informatique serait identique dans son principe à celui décrit ci-dessus.

On observera cependant que la forme sous laquelle un fichier est enregistré sur un support informatique comporte des marques afin que le programme qui connaît ces marques puisse remettre les données enregistrées dans l'ordre convenable. Si ces marques sont altérées ou illisibles, la reconstitution devient pratiquement impossible.

L'utilisation d'un film photographique permet d'échapper à cet inconvénient quand les données sont enregistrées sur le film dans l'ordre de leur placement. La mosaïque de pixels formant une image reste constituée et une altération de certaines zones du film ne remet pas en cause cet ordre.

## Revendications

1. Procédé d'enregistrement d'images et de données de restauration de ces images, chacune desdites images se présentant sous la forme d'un réseau bidimensionnel de lignes et de colonnes de pixels, ledit procédé étant **caractérisé en ce que**, pour l'élaboration et l'enregistrement desdites données de restauration, on divise ladite image en blocs de pixels (4 ; $B_n$), chaque bloc (4 ; $B_n$) comprenant des pixels

d'au moins deux lignes et deux colonnes, on calcule pour chaque bloc (4 ; $B_n$) des données de restauration à partir d'au moins les données d'image contenues dans lesdits pixels dudit bloc (4 ; $B_n$) et on enregistre lesdites données de restauration dudit bloc(4 ; $B_n$) sous la forme d'au moins un pixel (5) présentant une valeur fonction desdites données de restauration.

2. Procédé conforme à la revendication 1, **caractérisé en ce qu'**on enregistre ladite image ($\underline{I}$) et lesdites données de restauration sur des première (2) et deuxième (3) plages d'un support d'enregistrement (1) respectivement, lesdites) plages (2,3) étant disposées dans une relation de position relative prédéterminée.

3. Procédé conforme à la revendication 2, **caractérisé en ce que**, pour calculer lesdites données de restauration, on effectue le produit de convolution des valeurs desdits pixels de chaque bloc (4) avec un opérateur de filtrage, on calcule l'extremum par bloc et on enregistre les données de restauration ainsi calculées sur ladite deuxième plage ($\underline{I}$) dans une position homologue de celle du bloc (4) de pixels correspondant de ladite image ($\underline{I}$) enregistrée sur ladite première plage (2).

4. Procédé conforme à la revendication 3, **caractérisé en ce que** ledit opérateur de filtrage est choisi de manière que ladite deuxième plage (3) présente une image de contours d'éléments homologues de ceux de l'image ($\underline{I}$) portée par ladite première plage (2).

5. Procédé conforme à la revendication 2, **caractérisé en ce que**, pour calculer lesdites données de restauration, on mesure au moins une caractéristique optique desdits pixels de chacun desdits blocs (4), on additionne lesdites caractéristiques optiques ainsi mesurées et on enregistre au moins un pixel (5) présentant la caractéristique optique somme ainsi calculée sur ladite deuxième plage (3) dans une position homologue de celle du bloc de pixels correspondant de ladite image ($\underline{I}$) enregistrée sur ladite première plage (2).

6. Procédé conforme à la revendication 1, **caractérisé en ce que**, pour calculer lesdites données de restauration, on applique une transformation en ondelettes à ladite image ($\underline{I}$) à partir de mesures d'au moins une caractéristique optique des pixels de chacun desdits blocs (4) et on enregistre au moins une des images (YdXd, YsXd, YdXs, YsXs) de données de restauration résultant de ladite transformation.

7. Procédé conforme à la revendication 6, **caractérisé en ce qu'**on réitère ladite transformation sur au moins une des images résultant de la première transformation et on enregistre au moins une des images résultant de la deuxième transformation.

8. Procédé conforme à la revendication 6, **caractérisé en ce qu'**on enregistre sur un support d'enregistrement une pluralité d'images de données de restauration (YdXd, YsXd, YdXs, YsXs) résultant de ladite transformation en ondelettes.

9. Procédé conforme à la revendication 7, **caractérisé en ce qu'**on enregistre ladite image ($\underline{I}$) et lesdites données de restauration (YdXd, YsXd, YdXs, YsXs) sur des première (2) et deuxième (3) plages d'un support d'enregistrement (1) respectivement, lesdites plages (2, 3) étant disposées dans une relation de position relative prédéterminée.

10. Procédé conforme à la revendication 2, appliqué à une image ($I_n$) formant partie d'une séquence d'images animées, **caractérisé en ce qu'**on calcule, à partir du contenu desdits blocs ($B_{n-1}$ ; $B_n$ ; $B_{n+1}$) d'au moins deux images consécutives ($I_{n-1}$ ; $I_n$ ; $I_{n+1}$) de ladite séquence, des vecteurs de déplacement de blocs homologues desdites images et on enregistre les composantes (XiYj) desdits vecteurs sur ladite deuxième plage (3), dans une position homologue de celle dudit bloc ($B_n$) considéré dans l'image ($I_n$) associée.

11. Procédé conforme à la revendication 10, **caractérisé en ce qu'**on enregistre en outre sur ledit support (S) des coefficients de pondération de termes d'une combinaison linéaire de blocs permettant de calculer un bloc de remplacement d'un bloc détérioré d'une image enregistrée sur ledit support.

12. Procédé conforme à la revendication 11, **caractérisé en ce qu'**on enregistre en outre sur ledit support (S) des expressions simplifiées desdits blocs d'une image, substituables au bloc correspondant quand le calcul dudit bloc de remplacement s'avère impossible.

13. Procédé conforme à la revendication 12, applicable à un support (S) d'enregistrement photographique en couleurs, **caractérisé en ce que** les enregistrements desdits vecteurs, coefficients de pondération et expressions simplifiées desdits blocs sont répartis dans des couches d'enregistrement de couleurs différentes dudit support (S).

14. Procédé conforme à l'une quelconque des revendications précédentes, **caractérisé en ce qu'**on enregistre en outre sur ledit support d'enregistrement d'images un mode d'emploi ($D_1$, $D_2$) desdites données de restauration.

15. Procédé conforme à la revendication 8, **caractérisé**

**en ce que** ledit mode d'emploi est à lecture visuelle.

16. Procédé conforme à la revendication 8 ou 9, **caractérisé en ce que** ledit mode d'emploi est à lecture automatique.

17. Support d'enregistrement d'images résultant de la mise en oeuvre du procédé conforme à l'une quelconque des revendications précédentes, comportant au moins une plage (3) supportant des données de restauration d'une image se présentant sous la forme d'un réseau de lignes et de colonnes de pixels, support **caractérisé en ce que** lesdites données de restauration sont enregistrées sous la forme d'un deuxième réseau de pixels (5) présentant chacun une caractéristique optique fonction de données de restauration calculées à partir des données d'image contenues dans un (4) desdits blocs de pixels résultant de ladite division de ladite image pixellisée.

18. Support d'enregistrement conforme à la revendication 17, **caractérisé en ce que** ladite image (I) et lesdites données de restauration sont enregistrées sur des première (2) et deuxième (3) plages dudit support (1) respectivement, lesdites plages (2, 3) étant disposées dans une relation de position relative prédéterminée.

19. Support conforme à la revendication 18, **caractérisé en ce que** l'aire de la surface de ladite deuxième plage (3) est inférieure ou égale au quart de celle de ladite première plage (2).

20. Procédé de restauration d'une image portée par un support d'enregistrement conforme à l'une quelconque des revendications 17 à 19, **caractérisé en ce que** a) on détecte une zone détériorée de ladite image (I), et b) on extrait desdites données de restauration les valeurs de pixels propres à remplacer les pixels de ladite zone détériorée.

**Patentansprüche**

1. Verfahren zum Aufzeichnen von Bildern und von Daten zur Wiederherstellung dieser Bilder, wobei sich jedes der Bilder in Form eines zweidimensionalen Netzwerks aus Pixelzeilen und -spalten darstellt, wobei das Verfahren **dadurch gekennzeichnet ist, dass** das Bild für das Erstellen und die Aufzeichnung der Wiederherstellungsdaten in Pixelblöcke (4; $B_n$) unterteilt wird, wobei jeder Block (4; $B_n$) Pixel von mindestens zwei Zeilen und zwei Spalten umfasst, für jeden Block (4; $B_n$) Wiederherstellungsdaten aus mindestens den Bilddaten berechnet werden, die in den Pixeln des Blocks (4; $B_n$) enthalten sind und die Wiederherstellungsdaten des Blocks (4; $B_n$) in der Form von mindestens einem Pixel (5) gespeichert werden, das einen Wert darstellt, der Funktion der Wiederherstellungsdaten ist.

2. Verfahren nach Anspruch 1, **dadurch gekennzeichnet, dass** das Bild (I) und die Wiederherstellungsdaten in einem jeweiligen ersten (2) und zweiten (3) Bereich eines Aufzeichnungsmediums (1) gespeichert werden, wobei die Bereiche (2, 3) in einem vorbestimmten relativen Positionsverhältnis angeordnet sind.

3. Verfahren nach Anspruch 2, **dadurch gekennzeichnet, dass** zur Berechnung der Wiederherstellungsdaten das Faltungsprodukt der Werte der Pixel jedes Blocks (4) mit einem Filteroperator durchgeführt wird, das Extremum je Block berechnet wird und die derart berechneten Wiederherstellungsdaten im zweiten Bereich (I) an einer Position gespeichert werden, die der des Pixelblocks (4) entspricht, der dem Bild (I) entspricht, das im ersten Bereich (2) gespeichert ist.

4. Verfahren nach Anspruch 3, **dadurch gekennzeichnet, dass** der Filteroperator derart ausgewählt ist, dass der zweite Bereich (3) ein Bild von Elementkonturen darstellt, die denen des Bildes (I) entsprechen, das vom ersten Bereich (2) getragen wird.

5. Verfahren nach Anspruch 2, **dadurch gekennzeichnet, dass** zur Berechnung der Wiederherstellungsdaten mindestens ein optisches Merkmal der Pixel jedes Blocks (4) gemessen wird, die derart gemessenen optischen Merkmale addiert werden und mindestens ein Pixel (5), das das derart berechnete optische Summenmerkmal aufweist, im zweiten Bereich (3) an einer Position gespeichert wird, die der des Pixelblocks entspricht, der dem Bild (I) entspricht, das im ersten Bereich (2) gespeichert ist.

6. Verfahren nach Anspruch 1, **dadurch gekennzeichnet, dass** zur Berechnung der Wiederherstellungsdaten ausgehend von Messungen mindestens eines optischen Merkmals der Pixel jedes Blocks (4) eine Wavelet-Transformation auf das Bild (I) angewendet wird und mindestens eines der Bilder (YdXd, YsXd, YdXs, YsXs) der Wiederherstellungsdaten, die Ergebnis der Transformation sind, gespeichert wird.

7. Verfahren nach Anspruch 6, **dadurch gekennzeichnet, dass** die Transformation für mindestens eines der Bilder, die Ergebnis der ersten Transformation sind, wiederholt wird und mindestens eines der Bilder, die Ergebnis der zweiten Transformation sind, gespeichert wird.

8. Verfahren nach Anspruch 6, **dadurch gekennzeichnet, dass** auf einem Aufzeichnungsmedium eine Vielzahl von Bildern von Wiederherstellungsdaten (YdXd, YsXd, YdXs, YsXs) gespeichert wird, die Ergebnis der Wavelet-Transformation sind.

9. Verfahren nach Anspruch 7, **dadurch gekennzeichnet, dass** das Bild (I) und die Wiederherstellungsdaten (YdXd, YsXd, YdXs, YsXs) im jeweiligen ersten (2) und zweiten (3) Bereich eines Aufzeichnungsmediums (1) gespeichert werden, wobei die Bereiche (2, 3) in einem vorbestimmten relativen Positionsverhältnis angeordnet sind.

10. Verfahren nach Anspruch 2, das auf ein Bild ($I_n$) angewendet wird, das Teil einer Sequenz bewegter Bilder ist, **dadurch gekennzeichnet, dass** aus dem Inhalt der Blöcke ($B_{n-1}$; $B_n$; $B_{n+1}$) aus mindestens zwei aufeinanderfolgenden Bildern ($I_{n-1}$; $I_n$; $I_{n+1}$) der Sequenz entsprechende Blockverlagerungsvektoren der Bilder berechnet werden und die Komponenten (XiYj) der Vektoren im zweiten Bereich (3) an einer Position gespeichert werden, die der des Blocks ($B_n$) entspricht, der im zugeordneten Bild ($I_n$) berücksichtigt wird.

11. Verfahren nach Anspruch 10, **dadurch gekennzeichnet, dass** auf dem Medium (S) zudem Gewichtungskoeffizienten von Elementen einer linearen Blockkombination gespeichert werden, was erlaubt, einen Ersatzblock für einen beschädigten Block eines auf dem Medium gespeicherten Bildes zu berechnen.

12. Verfahren nach Anspruch 11, **dadurch gekennzeichnet, dass** auf dem Medium (S) zudem vereinfachte Expressionen der Blöcke eines Bildes gespeichert werden, durch die der entsprechende Block ersetzbar ist, wenn sich die Berechnung des Ersatzblocks als unmöglich erweist.

13. Verfahren nach Anspruch 12, das auf ein Farbfotoaufzeichnungsmedium (S) anwendbar ist, **dadurch gekennzeichnet, dass** die Aufzeichnungen der Vektoren, Gewichtungskoeffizienten und vereinfachten Expressionen der Blöcke in verschiedenen Farbaufzeichnungsschichten des Mediums (S) verteilt sind.

14. Verfahren nach einem der vorangehenden Ansprüche, **dadurch gekennzeichnet, dass** auf dem Bildaufzeichnungsmedium zudem eine Gebrauchsanweisung ($D_1$, $D_2$) der Wiederherstellungsdaten gespeichert wird.

15. Verfahren nach Anspruch 8, **dadurch gekennzeichnet, dass** die Gebrauchsanweisung visuell lesbar ist.

16. Verfahren nach Anspruch 8 oder 9, **dadurch ge-** **kennzeichnet, dass** die Gebrauchsanweisung automatisch lesbar ist.

17. Bildaufzeichnungsmedium, das Ergebnis der Umsetzung des Verfahrens nach einem der vorangehenden Ansprüche ist, das mindestens einen Bereich (3) aufweist, der Wiederherstellungsdaten eines Bildes trägt, das sich in Form eines Netzwerks aus Pixelzeilen und -spalten darstellt, wobei das Medium **dadurch gekennzeichnet ist, dass** die Wiederherstellungsdaten in Form eines zweiten Netzwerks von Pixeln (5) gespeichert werden, die jeweils ein optisches Merkmal aufweisen, das Funktion von Wiederherstellungsdaten ist, die aus Bilddaten berechnet werden, die in einem (4) der Pixelblöcke enthalten sind, die Ergebnis der Division des verpixelten Bildes sind.

18. Aufzeichnungsmedium nach Anspruch 17, **dadurch gekennzeichnet, dass** das Bild (I) und die Wiederherstellungsdaten in einem jeweiligen ersten (2) und zweiten (3) Bereich des Mediums (1) gespeichert werden, wobei die Bereiche (2, 3) in einem vorbestimmten relativen Positionsverhältnis angeordnet sind.

19. Medium nach Anspruch 18, **dadurch gekennzeichnet, dass** der Oberflächenplatz des zweiten Bereichs (3) kleiner als oder gleich dem Viertel desjenigen des ersten Bereichs (2) ist.

20. Verfahren zur Wiederherstellung eines Bildes, das von einem Aufzeichnungsmedium nach einem der Ansprüche 17 bis 19 getragen wird, **dadurch gekennzeichnet, dass** a) eine beschädigte Zone des Bildes (I) festgestellt wird und b) aus den Wiederherstellungsdaten die Werte von Pixeln extrahiert werden, die imstande sind, die Pixel der beschädigten Zone zu ersetzen.

**Claims**

1. A method of recording images and data for retrieving said images, each of said images assuming the form of a two-dimensional array of rows and columns of pixels, said method being **characterized in that**, to develop and record the retrieval data, the image is divided into blocks of pixels (4; $B_n$), each block (4; $B_n$) comprising pixels of at least two rows and two columns, retrieval data is calculated for each block (4; $B_n$) from at least the image data contained in the pixels of that block (4; $B_n$), and said retrieval data of the block (4; $B_n$) is recorded in the form of at least one pixel (5) having a value as a function of said retrieval data.

2. The method according to claim 1, **characterized in**

**that** the image ($\underline{I}$) and the retrieval data are recorded on first (2) and second (3) areas of a recording medium (1), respectively, said areas (2, 3) being arranged in a predetermined relative position relationship.

**3.** The method according to claim 2, **characterized in that**, to calculate the retrieval data, the convolution integral of the values of the pixels of each block (4) is done with a filtering operator, the extremum is calculated by block, and the retrieval data thus calculated is recorded on the second area ($\underline{I}$) in a homologous position of the corresponding block (4) of pixels of the image ($\underline{I}$) recorded on the first area (2).

**4.** The method according to claim 3, **characterized in that** said filtering operator is chosen such that the second area (3) has an image of element contours homologous to those of elements of the image ($\underline{I}$) borne by the first area (2).

**5.** The method according to claim 2, **characterized in that**, to calculate the retrieval data, at least one optical characteristic of the pixels of each of said blocks (4) is measured, said optical characteristics thus measured are added, and at least one pixel (5) having the sum optical characteristic thus calculated is recorded on the second area (3) in a position homologous to that of the block of corresponding pixels of the image ($\underline{I}$) recorded on the first area (2).

**6.** The method according to claim 1, **characterized in that**, to calculate the retrieval data, a wavelet transform is applied to said image ($\underline{I}$) from measurements of at least one optical characteristic of the pixels of each of said blocks (4) and at least one of the retrieval data images (YdXd, YsXd, YdXs, YsXs) resulting from said transform is recorded.

**7.** The method according to claim 6, **characterized in that** said transform is reiterated on at least one of the images resulting from the first transform and at least one of the images resulting from the second transform is recorded.

**8.** The method according to claim 6, **characterized in that** a plurality of retrieval data images (YdXd, YsXd, YdXs, YsXs) resulting from the wave transform are recorded on a recording medium.

**9.** The method according to claim 7, **characterized in that** said image ($\underline{I}$) and said retrieval data (YdXd, YsXd, YdXs, YsXs) are recorded on first (2) and second (3) areas of a recording medium (1), respectively, said areas (2, 3) being arranged in a predetermined relative position relationship.

**10.** The method according to claim 2, applied to an image ($I_n$) that is part of a sequence of animated images, **characterized in that** movement vectors of the homologous blocks of these images are calculated from the content of the blocks ($B_{n-1}$ ; $B_n$ ; $Bn_{+1}$) of at least two consecutive images ($I_{n-1}$ ; $I_n$ ; $I_{n+1}$) of said sequence and the components (XiYj) of said vectors are recorded on a second area (3), in a position homologous to that of said block ($B_n$) in the associated image ($I_n$).

**11.** The method according to claim 10, **characterized in that** weights of terms of a linear combination of blocks are also recorded on said medium (S) making it possible to calculate a replacement block for a damaged block of an image recorded on the medium.

**12.** The method according to claim 11, **characterized in that** simplified expressions of the blocks of an image are also recorded on the medium (S), these simplified expressions being able to be substituted for the corresponding block when the calculation of said replacement block is impossible.

**13.** The method according to claim 12, applicable to a color photographic recording medium (S), **characterized in that** the recordings of the vectors, weights and simplified expressions of said blocks are distributed in recording layers of different colors of said medium (S).

**14.** The method according to any one of the preceding claims, **characterized in that** a manual ($D_1$, $D_2$) for use of said retrieval data is also recorded on the medium for recording of images.

**15.** The method according to claim 8, **characterized in that** said manual is designed for visual reading.

**16.** The method according to claim 8 or 9, **characterized in that** said manual is designed for automatic reading.

**17.** A medium for recording images resulting from the implementation of the method according to any one of the preceding claims, including at least one area (3) bearing retrieval data of an image assuming the form of an array of rows and columns of pixels, the medium being **characterized in that** said retrieval data is recorded in the form of a second array of pixels (5) each having an optical characteristic as a function of retrieval data calculated from image data contained in one (4) of said blocks of pixels resulting from the division of the pixilated image.

**18.** The recording medium according to claim 17, **characterized in that** said image ($\underline{I}$) and said retrieval data are recorded on first (2) and second (3) areas of the medium (1), respectively, these areas (2, 3) being arranged in a predetermined relative position relationship.

19. The medium according to claim 18, **characterized in that** the area of the surface of the second area (3) is less than or equal to a quarter of that of the first area (2).

20. A method for retrieving an image borne by a recording medium according to one of claims 17 to 19, **characterized in that** a) a damaged zone of said image ($\underline{I}$) is detected, and b) the values of pixels able to replace the pixels of the damaged zone are extracted from the retrieval data.

FIG.1

Bloc 2x2
Image 300x300
Matrice 150x150

FIG.3

Bloc 2x2
Image 300x300
Matrice 150x150

FIG.2

YdXd
YsXd
YsXs
YdXs
YsXs

FIG.4

Bloc 2x2
Image 300x300
Matrice 150x150

YdXd
YdXs
YsXd
YsXs

FIG.5

16

Bn-1    Var    Bn    Vav    Bn+1

In-1    In    In+1

FIG.6

-I1-    -I2-    -V5-    S

-V1-    -V3-    -V2-    -V4-

-I3-    -I4-    -I5-

FIG.7

2

Mode d'emploi normal

3

Vérification    C3    C4

A    B    P    Q    P = A + B + C + D

C    D    R    S    Q = A + B - C - D

R = A - B + C - D

S = A - B - C + D

E

E = A - B - C - D    ✕ = non utilisé pour la reconstruction

C2

FIG.8

2    ✕

X=E+B+C+D    f3    f4

Mode d'emploi restauration

Restauration    C3    C4

A    B    P    Q    P = A + B + C + D

C    D    R    S    Q = A + B - C - D

R = A - B + C - D

S = A - B - C + D

E

E = A - B - C - D    ✕ = non utilisé pour la reconstruction

C1    C2

FIG.9

**RÉFÉRENCES CITÉES DANS LA DESCRIPTION**

**Documents brevets cités dans la description**

- FR 0758910
- FR 2867342 A
- FR 2879312 A